(19) Europäisches Patentamt
European Patent Office
Office européen des brevets

(11) **EP 4 556 582 A1**

(12) **EUROPEAN PATENT APPLICATION**
published in accordance with Art. 153(4) EPC

(43) Date of publication:
**21.05.2025  Bulletin 2025/21**

(51) International Patent Classification (IPC):
***C22B 1/14*** *(2006.01)*      ***C22B 1/16*** *(2006.01)*

(21) Application number: **23859722.3**

(52) Cooperative Patent Classification (CPC):
**C22B 1/14; C22B 1/16;** Y02P 10/20

(22) Date of filing: **10.05.2023**

(86) International application number:
**PCT/JP2023/017634**

(87) International publication number:
**WO 2024/047951 (07.03.2024 Gazette 2024/10)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **02.09.2022  JP 2022140392**

(71) Applicant: **JFE Steel Corporation
Tokyo 100-0011 (JP)**

(72) Inventors:
• **FUJIWARA Shohei
Tokyo 100-0011 (JP)**
• **NAKAMURA Naoto
Tokyo 100-0011 (JP)**
• **HORITA Kenya
Tokyo 100-0011 (JP)**
• **TAKEHARA Kenta
Tokyo 100-0011 (JP)**
• **IWAMI Yuji
Tokyo 100-0011 (JP)**
• **HIGUCHI Takahide
Tokyo 100-0011 (JP)**

(74) Representative: **Hoffmann Eitle
Patent- und Rechtsanwälte PartmbB
Arabellastraße 30
81925 München (DE)**

(54) **METHOD FOR PRODUCING IRON ORE PELLET**

(57)     A pellet production method that can suppress bursting of green pellets can be provided. The method for producing an iron ore pellet includes grinding iron ore with iron content of 63 mass% or less to obtain ore powder, in which a volatile matter of the iron ore is 3.3 mass% or more, the ore powder has a cumulative 90 % diameter of 150 $\mu$m or less in a volume-based particle size distribution and a particle size distribution index based on the harmonic mean diameter of 14,700 or more and 510,000 or less.

## Description

TECHNICAL FIELD

This disclosure relates to a method for producing an iron ore pellet.

BACKGROUND

In the shaft furnace method of reduction, which is currently mainstream as a direct reduction method for ironmaking, lump ore or pellets are used as charged raw material. The pellets are produced through the processes of grinding, mixing, granulation and baking of the ore. In these producing processes, iron ore pellets before baking (so-called green pellets) are required to be strong enough to prevent disintegration or powdering during handling such as transportation from the granulation process to the baking process. Therefore, efforts are being made to improve the strength of green pellets.

JP2000-273552A (PTL 1) discloses a method for producing reducing agent-mixed pellets. In this pellet production method, at least one of carboxyl methyl cellulose or polyvinyl alcohol, or tar is added to powdered iron ore and coal as a reducing agent and then water is added in a granulator to form pellets to produce reducing agent-mixed pellets. The reducing-agent mixed pellets are further dried in a dryer at an ambient temperature of 150 °C to 170 °C. It is believed that the use of hydrocarbon binders such as carboxyl methyl cellulose, polyvinyl alcohol, and tar in the reducing agent-mixed pellets can significantly improve the drop strength of the dry pellets.

JP2002-206120A (PTL 2) discloses a pellet for reduction furnaces, a method for producing the same, and a method for reducing oxidized metals. In the pellet production method, raw materials discharged from a raw material storage tank are kneaded in a kneader, and fine powder containing oxidized metals and carbon is used as raw materials in a pan-type granulator to produce pellets. These pellets are said to prevent the disintegration of the raw material pellets when they are classified by a pellet sieving device, dried in a pellet dryer and then baked and reduced in a rotary hearth furnace.

JP2009-161791A (PTL 3) discloses a method for producing a carbon-containing non-baked pellet for blast furnaces. In the method for producing a pellet, a hydraulic binder is added to pulverized iron-containing raw materials and pulverized coal, the blending ratio of the pulverized coal is adjusted so that the carbon content in the total raw materials is 15 mass% to 25 mass%, mixing and granulating is performed while adjusting the water content, and then curing treatment is conducted to produce a carbon-containing non-baked pellet with a cold crushing strength of 85 kg/cm$^2$ or higher for blast furnaces. In this pellet producing method, for the curing treatment, the pellet after granulation is left in the air for 12 to 48 hours in a primary curing yard, and then the pellet is charged into a shaft furnace for secondary curing, where it undergoes steam blowing treatment at a temperature of 60 °C to 90 °C and a treatment time of 5 hours or longer, consecutively followed by drying so that the total treatment time for steam blowing and drying is 8 hours or less.

CITATION LIST

Patent Literature

PTL 1: JP2000-273552A
PTL 2: JP2002-206120A
PTL 3: JP2009-161791A

SUMMARY

(Technical Problem)

As described above, ore powder, which is made by grinding iron ore in powder form, is used in the production of iron ore pellets (green pellets). However, if the particle size (particle diameter) of the ore powder is reduced to increase the strength of the green pellet, the green pellet becomes denser, and bursting is more likely to occur in the drying or baking process. Bursting is a phenomenon in which, when the volatile matter of iron ore in the green pellet vaporizes, the green pellet bursts, explodes, or powders due to the pressure of vapor of the volatile matter generated inside the green pellet. The volatile matter of iron ore in the green pellet is, for example, water of crystallization of iron ore in the green pellet. Bursting causes the pellet to crack, which significantly reduces the strength of the pellet after baking.

As mentioned above, since the presence of water of crystallization can cause bursting, currently, high-grade ore with less water of crystallization is generally used as the raw material ore (iron ore) for pellets. However, it is predicted that it will become more difficult to secure stable supplies of high-grade ore in the future as demand for high-grade ore increases. For this reason, the use of low-grade ores produced in Australia, India, and other countries with iron content (total Fe content) of 63 mass% or less is being considered. However, as the content of water of crystallization in the iron ore pellet (green pellet) increases, it is more prone to bursting as described above. Therefore, it is desirable to provide a pellet production method that can suppress bursting of green pellets.

It could thus be helpful to provide a method for producing a pellet that can suppress bursting of green pellets.

(Solution to Problem)

The method for producing an iron ore pellet according to this disclosure to achieve the above-mentioned purpose is as follows.

[1] A method for producing an iron ore pellet, comprising grinding iron ore with iron content of 63 mass% or less to obtain ore powder, wherein

a volatile matter of the iron ore is 3.3 mass% or more,
a cumulative 90 % diameter of the ore powder is 150 $\mu$m or less in a volume-based particle size distribution, and
a particle size distribution index of the ore powder defined by Equations (1) to (4) below is 14,700 or more and 510,000 or less,
[Math. 1]

$$D_\mathrm{p} = 1 / \sum \left( w_i / d_i \right) \qquad (1)$$

[Math. 2]

$$I_\mathrm{sp} = 100 \times \sqrt{I_\mathrm{S} \times I_\mathrm{P}} \qquad (2)$$

[Math. 3]

$$I_\mathrm{S} = D_\mathrm{P}^2 \sum w_i \left( 1 / d_i - 1 / D_\mathrm{p} \right)^2 \qquad (3)$$

[Math. 4]

$$I_\mathrm{P} = \left( 1 / D_\mathrm{p} \right)^2 \sum w_i \left( d_i - D_\mathrm{p} \right)^2 \qquad (4)$$

where, Dp is a harmonic mean diameter ($\mu$m), Isp is a particle size distribution index, wi is a particle ratio, and di ($\mu$m) is a representative particle size.
The method for producing an iron ore pellet according to this disclosure may further be as follows.

[2] The method for producing an iron ore pellet according to [1], wherein the volatile matter of the iron ore is 12.0 mass% or less.
[3] The method for producing an iron ore pellet according to [1] or [2], wherein the ore powder has a cumulative 50 % diameter of less than 61 $\mu$m in the volume-based particle size distribution.
[4] The method for producing an iron ore pellet according to any one of [1] to [3], wherein the ore powder has a cumulative 10 % diameter of less than 7.1 $\mu$m in the volume-based particle size distribution.
[5] The method for producing an iron ore pellet according to any one of [1] to [4], wherein the ore powder has a harmonic mean diameter of less than 13 $\mu$m.

(Advantageous Effect)

The method for producing an iron ore pellet of this disclosure can provide a method for producing a pellet that can suppress bursting of green pellets.

DETAILED DESCRIPTION

This section describes a method for producing an iron ore pellet according to an embodiment of this disclosure.

First, an overview of the method for producing an iron ore pellet according to the present embodiment is described. The iron ore pellet according to the present embodiment is a so-called green pellet (pellet before baking). The method for producing an iron ore pellet according to the present embodiment includes the grind process in which iron ore with iron content of 63 mass% or less (so-called low-grade ore) is grinded to obtain ore powder. In the following description, iron ore with iron content of 63 mass% or less is simply referred to as iron ore.

In the method for producing an iron ore pellet according to the present embodiment, the volatile matter of the iron ore used to obtain the ore powder is 3.3 mass% or more.

The ore powder has a cumulative 90 % diameter of 150 $\mu$m or less in the volume-based particle size distribution. The ore powder has a particle size distribution index of 14,700 or more and 510,000 or less as defined by Equations (1) to (4) above. The particle ratio wi in Equations (1), (3), and (4) is the particle ratio in the section of representative particle size di when the particle size distribution is divided into sections of a specified particle size range and evaluated.

The method for producing an iron ore pellet according to the present embodiment can provide a method for producing a pellet that can suppress bursting of green pellets.

In the present embodiment, bursting is a phenomenon in which, when the volatile matter of iron ore in the green pellet vaporizes, the green pellet bursts, explodes, or powders due to the pressure of vapor of the volatile matter generated inside the green pellet.

The following is a detailed description of the method for producing an iron ore pellet according to the present embodiment.

The iron ore pellet according to the present embodiment is a pellet before baking, so-called green pellet. In the following description, to distinguish between pellets before and after baking, the iron ore pellet (pellet before baking) according to the present embodiment may be referred to as green pellet and the pellet after baking as baked pellet. In the present embodiment, the green pellet and baked pellet can contain an auxiliary law material (e.g., bentonite) other than iron ore.

In addition to the grind process described above, the method for producing an iron ore pellet according to the present embodiment may further include a granulation process in which the ore powder is granulated to obtain green pellets. The green pellets may then be baked in a baking process to become baked pellets.

The type and mix proportion (ore mix proportion) of iron ore used as raw material for green pellets are not limited. The raw material for green pellets may consist of a single iron ore or a mixture of multiple ores in any mix proportion.

In the present embodiment, the volatile matter of the iron ore used as the raw material for green pellets refers to the water adsorbed on the iron ore and water of crystallization contained in the crystals in the iron ore. In detail, the volatile matter of the iron ore in the green pellets is, for example, water adsorbed on the iron ore in the green pellets and water of crystallization of the iron ore in the green pellets. The volatile matter content can be measured as the amount of weight loss of iron ore when the iron ore is held at 1000 °C for 30 minutes (LOI: Loss On Ignition).

In the present embodiment, iron ore with a volatile matter content of 3.3 mass% or more is used as raw material for green pellets. This allows the use of inexpensive or readily available iron ore raw materials. The volatile matter of iron ore is preferably 12.0 mass% or less.

The grind process is the process of grinding iron ore to obtain ore powder (iron ore powder), in which the iron ore is in powder form. In the present embodiment, the grind method of iron ore and the grind time required for grind in the grind process are not limited. Iron ore can be grinded, for example, in a ball mill, hammer mill, and roll grinder.

The shape of the ore powder is not limited. The particle size (particle diameter) of the ore powder is preferably, for example, 250 $\mu$m or less (e.g., passing completely through a 250 $\mu$m sieve, so called, 250 $\mu$m pass). If the ore powder contains coarse grains with a particle size exceeding 250 $\mu$m, the strength of the green pellets may be reduced.

The values of the particle size distribution of the ore powder in the present embodiment are measured using laser diffraction particle size measurement (Mastersizer 3000 manufactured by Malvern). Water is used as the dispersant when measuring the particle size distribution.

The particle size distribution of ore powder has a cumulative 90 % diameter of 150 $\mu$m or less in the volume-based particle size distribution. In the present embodiment, the particle size distribution of ore powder has a particle size distribution index defined by Equations (1) to (4) above, i.e., a particle size distribution index based on harmonic mean diameter of 14,700 or more and 510,000 or less, as described above. These can suppress bursting pellets.

As mentioned above, bursting is a phenomenon in which the volatile matter of iron ore in the green pellet vaporizes when the green pellet is heated, causing the green pellet to explode or powder. In detail, bursting is a phenomenon in which the green pellet bursts, explodes, or powders due to the pressure of vapor generated inside the green pellet when the green pellet is dried or when water of crystallization is desorbed from the iron ore crystals in the green pellet.

The harmonic mean diameter is often used, for example, to evaluate the gas permeability of a particle or filling layer. Therefore, it can be considered suitable for evaluating the ease of vapor escape from the inside of the green pellet to the outside. In general, the void ratio of the powder-filled layer decreases, because, for example, as the particle size distribution widens, the particle size ratio of the largest to the smallest particles increases, and relatively small particles enter the spaces between relatively large particles. Therefore, the particle size distribution index, which represents the spread of the particle size distribution, can be considered suitable for evaluating the ease of vapor escape from the inside to the outside of the green pellets.

The particle size distribution of ore powder preferably has a cumulative 50 % diameter of less than 61 μm in the volume-based particle size distribution. This can suppress pellet bursting better. Further, the particle size distribution of ore powder preferably has a cumulative 10 % diameter of less than 7.1 μm in the volume-based particle size distribution. This also can suppress pellet bursting better.

The particle size distribution of the ore powder preferably has a harmonic mean diameter of less than 13 μm.

The granulation process is the process of granulating ore powder to obtain iron ore pellets (green pellets). The granulation method in the granulation process is not limited. In the granulation process, for example, a pelletizer may be used to granulate the ore powder. For example, a pan-type granulator (so-called pan pelletizer) may be used as a pelletizer.

The shape and size of the iron ore pellets (e.g., particle size or average particle size) are not limited in the present embodiment and may be of any value. For the size of the green pellets, for example, the major and minor axis diameters are measured using a caliper, and their average value may be evaluated as particle size of the green pellets. The particle size of the green pellets is preferably 9 mm or more, which is the usual size used in this technical field. The particle size of the green pellets is preferably 16 mm or less, which is the usual size used in this technical field.

The green pellets are then subjected to the baking process and baked to become baked pellets. The baking temperature in the baking process is, for example, from 1200 °C to 1350 °C.

The ease of bursting, or bursting property, can be evaluated based on the temperature at which bursting occurs, for example, when the green pellets are heated gradually to increase the temperature of the green pellets. In detail, when the temperature at which bursting occurs is low, bursting is more likely to occur (bursting property is high) and can be evaluated as not good from the viewpoint of suppressing bursting. Conversely, when the temperature at which bursting occurs is high, bursting is less likely to occur (bursting property is low) and can be evaluated as good from the perspective of suppressing bursting.

EXAMPLES

Green pellets were produced using the following procedures and evaluated for pellet strength and bursting property.

As the iron ore used as the raw material (raw material ore) for the green pellets, ores (A, B) having the chemical compositions listed in Table 1 were used. The "LOI" in Table 1 is represented as the content (in mass%) of volatile matter such as water of crystallization, as described above. In Table 1, "T.Fe" represents the mass percent of iron content (total Fe content) in the iron ore. The "T.Fe" is the value determined based on the method for determination of total iron content for iron ores specified in JIS M 8212:2022. As listed in Table 1, Ore A and Ore B, the raw materials for the green pellets, are both iron ore with T.Fe of 63 mass% or less (so-called low-grade ore). In the following examples, the case where only Ore A or Ore B is a raw material for green pellets is exemplified, but if Ore A and Ore B are mixed in any proportion, the volatile matter of the iron ores as raw materials for the green pellets can be changed or adjusted in the range from 3.3 mass% to 12.0 mass%.

[Table 1]

Table 1

| Ore | Chemical Composition (mass%) | | | | | |
|-----|------|------------------|-----|--------------------|-----|-----|
|     | T.Fe | SiO$_2$ | CaO | Al$_2$O$_3$ | MgO | LOI |
| A   | 62.62 | 3.68 | 0.1 | 2.17 | 0.43 | 3.3 |
| B   | 55.59 | 5.68 | 0.1 | 3.09 | 0.08 | 12  |

Ore A or Ore B listed in Table 1 was grinded in a ball mill to obtain ore powders of Production No. 1 to No. 13 with the particle size distributions listed in Table 2. In grinding of Ore A or Ore B, the particle size distributions of the ore powders were made to differ by adjusting the grind time and sieving.

In Table 2, "D10" indicates the cumulative 10 % diameter on a volume basis, "D50" indicates the cumulative 50 % diameter (median size) on a volume basis, and "D90" indicates the cumulative 90 % diameter on a volume basis. In Table 2, "Dp" indicates the harmonic mean diameter and "Isp" indicates the particle size distribution index based on the harmonic mean diameter (see Equation 2). The particle size distributions listed in Table 2 were derived based on the particle sizes of the ore powders measured using laser diffraction particle size measurement (Mastersizer 3000 manufactured by Malvern). The dispersant used in the measurement of particle size distribution is water. The measurement range of the particle size distribution was 0.01 µm or more and 3500 µm or less, and this range was divided into 101 sections for measurement. As listed in Table 2, the ore powders from Production No. 1 to No. 13 have a cumulative 90 % diameter of 150 µm or less in the volume-based particle size distribution.

[Table 2]

Table 2

| No. | Ore | D10 | D50 | D90 | Dp | Isp | |
|---|---|---|---|---|---|---|---|
| 1 | A | 7.1 | 16.4 | 29.2 | 13.0 | 14524 | Comp. Ex.1 |
| 2 | A | 6.5 | 15.7 | 27.4 | 11.1 | 14949 | Ex.1 |
| 3 | A | 0.6 | 5.2 | 40.1 | 1.7 | 148198 | Ex.2 |
| 4 | A | 2.1 | 44.6 | 126.7 | 6.6 | 227586 | Ex.3 |
| 5 | A | 1.1 | 35.3 | 125.4 | 4.2 | 304790 | Ex.4 |
| 6 | A | 1.2 | 49.8 | 140.1 | 4.2 | 526592 | Comp. Ex.2 |
| 7 | B | 7.2 | 17.0 | 30.1 | 24.7 | 13868 | Comp. Ex.3 |
| 8 | B | 7.1 | 17.2 | 30.3 | 12.2 | 14909 | Ex. 5 |
| 9 | B | 2.9 | 33.4 | 96.1 | 8.1 | 125044 | Ex. 6 |
| 10 | B | 1.5 | 30.3 | 123.7 | 5.0 | 248661 | Ex. 7 |
| 11 | B | 1.1 | 57.5 | 147.2 | 4.5 | 391882 | Ex. 8 |
| 12 | B | 1.1 | 60.1 | 143.9 | 4.3 | 502482 | Ex. 9 |
| 13 | B | 1.2 | 53.4 | 141.2 | 4.4 | 523476 | Comp. Ex.4 |

Next, the ore powders from Production No. 1 to No. 13 were granulated in a pan-type granulator (pelletizer with pan diameter of 1.2 m) to obtain green pellets (granulation process). Granulation was performed by gradually adding water while rolling each ore powder on a rotating pan (rotation speed: 10 times/s). The rolled ore powder was gradually granulated with the addition of water and rolling and grew into pellets ranging from 9.5 mm to 12 mm in diameter, and then the pellets were collected. The pellets that grew from 9.5 mm to 12 mm were rolled on the pan for another 10 minutes to produce generally spherical green pellets. The amount of water added during the above granulation is about 10 % of the weight of the green pellets.

Table 3 lists the evaluation results of the strength ("drop strength" in Table 3) and bursting property ("bursting temperature" in Table 3) of the green pellets from Production No. 1 to No. 13. Table 3 reiterates the same "Isp" as listed in Table 2 for viewing convenience.

[Table 3]

Table 3

| No. | Ore | Isp | Drop Strength (number) | Bursting Temperature (°C) | |
|---|---|---|---|---|---|
| 1 | A | 14524 | 4.6 | 360 | Comp. Ex. 1 |
| 2 | A | 14949 | 5.1 | 360 | Ex.1 |
| 3 | A | 148198 | 6.6 | 340 | Ex.2 |

(continued)

| No. | Ore | Isp | Drop Strength (number) | Bursting Temperature (°C) | |
|---|---|---|---|---|---|
| 4 | A | 227586 | 7.7 | 320 | Ex.3 |
| 5 | A | 304790 | 8.5 | 300 | Ex.4 |
| 6 | A | 526592 | 15.4 | 240 | Comp. Ex.2 |
| 7 | B | 13868 | 4.4 | 360 | Comp. Ex.3 |
| 8 | B | 14909 | 5.1 | 360 | Ex5 |
| 9 | B | 125044 | 6.2 | 340 | Ex.6 |
| 10 | B | 248661 | 8.1 | 320 | Ex.7 |
| 11 | B | 391882 | 12.3 | 280 | Ex.8 |
| 12 | B | 502482 | 14.3 | 260 | Ex.9 |
| 13 | B | 523476 | 14.7 | 240 | Comp. Ex.4 |

In Table 3, "drop strength" indicates the strength evaluation results based on the drop test of the green pellets. In this example, the drop test was conducted by dropping the green pellets of each Production No. from a height of 50 cm and measuring the number of times the green pellets cracked or were broken (number of drops), and the greater or lesser number of drops was adopted as the drop strength. In detail, as the value of drop strength is larger, the strength of green pellets is higher. As the value of drop strength is smaller, the strength of green pellets is lower. The number of drops adopted as the drop strength is not counted when the green pellets crack or the green pellets are broken. In other words, drop strength is the number of times the green pellets can be dropped without cracking or breaking. In this example, the average (additive average) of 10 green pellets was used for the drop strength.

In Table 3, "bursting temperature" indicates evaluation results pertaining to the bursting property. The bursting temperature indicates the temperature at which bursting occurs when the green pellets are heated gradually to increase the temperature of the green pellets. In detail, when the bursting temperature is low, the bursting property is high. Further, when the bursting temperature is high, the bursting property is low.

In this example, the "bursting temperature" is the temperature measured as follows First, 200 g of the green pellets are loaded in a vertical cylindrical furnace (with a diameter of 50 mm). Then, air heated to 200 °C is ventilated as hot blast from below to above the layer of the green pellets for 10 minutes at a wind speed of 1.0 m/sec (converted to 0 °C/1 atm). The presence or absence of green pellet bursting is then checked. When bursting or powdering of the green pellets occurs during or at the end of the period when air heated to 200 °C is ventilated into the layer of the green pellets, then the bursting temperature of the green pellets is identified as 200 °C. When bursting of green pellets is not observed, the temperature of the hot blast is increased by another 20 °C and ventilated for 10 minutes to check for green pellet bursting. Thereafter, the temperature is increased in the same manner, in 20 °C increments (i.e., the green pellets are heated gradually), and the temperature at which the green pellets burst is identified. After repeated hot blast heating, the temperature at which the green pellets burst is identified as the bursting temperature of the green pellets, as described above.

In this example, from the viewpoint of whether the green pellets have enough strength to suppress disintegration or powdering during handling such as transportation until the green pellets are made into baked pellets (from the granulation process to the baking process), the green pellets are judged to have good strength when the drop strength is 5 times or more, and poor strength when the drop strength is less than 5 times.

Whether or not bursting was suppressed was determined by whether the bursting temperature was 250 °C or higher or lower than 250 °C. In detail, when the bursting temperature is 250 °C or higher, the bursting property is judged as low and good, and when the bursting temperature is lower than 250 °C, the bursting property is judged as high and poor.

If the bursting property is good but the strength is poor, the comprehensive evaluation is judged as poor. This is because even if the bursting property is good, if the strength is poor, properly baking and use afterwards cannot be achieved. Similarly, if the strength is good but the bursting property is poor, the comprehensive evaluation is also judged as poor. This is because even if the strength is good, if the bursting property is poor, proper use after baking cannot be achieved.

When the green pellets of each Production No. are evaluated according to the above, the green pellets of No. 1 and 7 are poor in terms of strength. In addition, the green pellets of No. 6 and 13 are poor in terms of bursting property. The green pellets other than the above (Nos. 2-5 and 8-12) have good strength and bursting property. In Tables 2 and 3, in consideration of these evaluations, Nos. 1, 6, 7, and 13 are labeled as Comparative Examples 1 to 4 in this order. Nos. 2-5 and 8-12 are also labeled as Examples 1-9 in this order.

In the green pellets of Production No. 1 to No. 13, as the particle size distribution index is smaller (the particle size distribution is sharper), the bursting temperature is higher. In other words, for the green pellets of No. 1 to No. 13, as the particle size distribution index is smaller, the bursting property is better.

For the green pellets of Production No. 1 to No. 13, as the particle size distribution index is larger (the particle size distribution is broader), the drop strength is higher. In other words, for the green pellets of No. 1 to No. 13, as the particle size distribution index is larger, the strength is better.

Considering the particle size distribution indices of the green pellets of Production Nos. 2-5 and 8-12, which have good strength and bursting property, the particle size distribution index needs to be 14,700 or more and 510,000 or less in order to suppress bursting of green pellets, assuming that the green pellets have good strength.

With respect to the particle size distribution, if the cumulative 50 % diameter is 5.0 $\mu$m or more and 61.0 $\mu$m or less, or at least 5.2 $\mu$m or more and 60.1 $\mu$m, it can be determined that both strength and bursting property can be achieved. If the cumulative 10 % diameter is at least 0.6 $\mu$m or more and 7.1 $\mu$m or less, it can be determined that both strength and bursting property can be achieved.

With respect to the harmonic mean diameter, if the diameter is at least 1.7 $\mu$m or more and less than 13.0 $\mu$m, it can be determined that both strength and bursting property can be achieved.

The method for producing an iron ore pellet can be provided in the above manner.

The embodiments disclosed herein are examples, and the embodiments of this disclosure are not limited thereto and may be modified as appropriate to the extent not to depart from the scope of this disclosure.

INDUSTRIAL APPLICABILITY

This disclosure is applicable to a method for producing an iron ore pellet.

**Claims**

1. A method for producing an iron ore pellet, comprising grinding iron ore with iron content of 63 mass% or less to obtain ore powder, wherein

   a volatile matter of the iron ore is 3.3 mass% or more,
   a cumulative 90 % diameter of the ore powder is 150 $\mu$m or less in a volume-based particle size distribution, and
   a particle size distribution index of the ore powder defined by Equations (1) to (4) below is 14,700 or more and 510,000 or less,
   [Math. 1]

   $$D_{\mathrm{p}} = 1 / \sum \left( w_i / d_i \right) \qquad (1)$$

   [Math. 2]

   $$I_{\mathrm{sp}} = 100 \times \sqrt{I_{\mathrm{S}} \times I_{\mathrm{P}}} \qquad (2)$$

   [Math. 3]

   $$I_{\mathrm{S}} = D_{\mathrm{P}}^2 \sum w_i \left( 1 / d_i - 1 / D_{\mathrm{p}} \right)^2 \qquad (3)$$

   [Math. 4]

   $$I_{\mathrm{P}} = \left( 1 / D_{\mathrm{p}} \right)^2 \sum w_i \left( d_i - D_{\mathrm{p}} \right)^2 \qquad (4)$$

   where, Dp is a harmonic mean diameter ($\mu$m), Isp is a particle size distribution index, wi is a particle ratio, and di ($\mu$m) is a representative particle size.

2. The method for producing an iron ore pellet according to claim 1, wherein the volatile matter of the iron ore is 12.0 mass% or less.

3. The method for producing an iron ore pellet according to claim 1 or 2, wherein the ore powder has a cumulative 50 % diameter of less than 61 $\mu$m in the volume-based particle size distribution.

4. The method for producing an iron ore pellet according to any one of claims 1 to 3, wherein the ore powder has a cumulative 10 % diameter of less than 7.1 $\mu$m in the volume-based particle size distribution.

5. The method for producing an iron ore pellet according to any one of claims 1 to 4, wherein the ore powder has a harmonic mean diameter of less than 13 $\mu$m.

## INTERNATIONAL SEARCH REPORT

| International application No. |
|---|
| **PCT/JP2023/017634** |

| A. | CLASSIFICATION OF SUBJECT MATTER |
|---|---|

*C22B 1/14*(2006.01)i; *C22B 1/16*(2006.01)i
FI:   C22B1/14; C22B1/16 101

According to International Patent Classification (IPC) or to both national classification and IPC

| B. | FIELDS SEARCHED |
|---|---|

Minimum documentation searched (classification system followed by classification symbols)

C22B1/14; C22B1/16

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | WO 2009/119291 A1 (KABUSHIKI KAISHA KOBE SEIKO SHO) 01 October 2009 (2009-10-01)<br>paragraph [0010] | 1-5 |
| Y | JP 49-115919 A (NKK CORP.) 06 November 1974 (1974-11-06)<br>claims, p. 2, upper left column, line 2 to lower right column, line 9 | 1-5 |
| A | WO 2018/181942 A1 (JFE STEEL CORP.) 04 October 2018 (2018-10-04)<br>paragraphs [0060]-[0066] | 1-5 |
| A | JP 62-37325 A (NKK CORP.) 18 February 1987 (1987-02-18)<br>entire text, all drawings | 1-5 |
| A | CN 107541598 A (SHANGHAI MEISHAN IRON & STEEL CO., LTD.) 05 January 2018 (2018-01-05)<br>entire text, all drawings | 1-5 |

☐ Further documents are listed in the continuation of Box C.   ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **19 July 2023** | **01 August 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

EP 4 556 582 A1

**INTERNATIONAL SEARCH REPORT**
Information on patent family members

International application No.

**PCT/JP2023/017634**

| Patent document cited in search report | | | Publication date (day/month/year) | Patent family member(s) | | | Publication date (day/month/year) |
|---|---|---|---|---|---|---|---|
| WO | 2009/119291 | A1 | 01 October 2009 | CN | 101932738 | A | |
| | | | | BR | PI0908190 | A | |
| | | | | RU | 2010143867 | A | |
| | | | | UA | 94202 | C | |
| | | | | JP | 2009-235507 | A | |
| JP | 49-115919 | A | 06 November 1974 | (Family: none) | | | |
| WO | 2018/181942 | A1 | 04 October 2018 | US | 2021/0102885 | A1 | |
| | | | | paragraphs [0077]-[0079] | | | |
| | | | | EP | 3605064 | A1 | |
| | | | | CN | 110476053 | A | |
| | | | | KR | 10-2019-0123765 | A | |
| JP | 62-37325 | A | 18 February 1987 | US | 4723995 | A | |
| | | | | EP | 207654 | A1 | |
| | | | | BR | 8602965 | A | |
| | | | | CA | 1259493 | A | |
| | | | | IN | 167409 | A | |
| | | | | KR | 10-1990-0006102 | B1 | |
| | | | | AU | 5839186 | A | |
| | | | | IN | 167409 | B | |
| CN | 107541598 | A | 05 January 2018 | (Family: none) | | | |

Form PCT/ISA/210 (patent family annex) (January 2015)

11

**REFERENCES CITED IN THE DESCRIPTION**

**Patent documents cited in the description**

- JP 2000273552 A
- JP 2002206120 A
- JP 2009161791 A